# EUROPEAN PATENT SPECIFICATION

(11) **EP 4 523 024 B1**
(45) Date of publication and mention of the grant of the patent: **30.09.2026**
(21) Application number: 23726054.2
(22) Date of filing: 10.05.2023
(51) Int. Cl.: G02B 21/36

(54) **IDENTIFYING A REGION OF INTEREST OF A SAMPLE**
IDENTIFIZIERUNG EINES INTERESSIERENDEN BEREICHS EINER PROBE
IDENTIFICATION D'UNE RÉGION D'INTÉRÊT D'UN ÉCHANTILLON

(30) Priority: 10.05.2022 EP 22172538
(43) Date of publication of application: 19.03.2025
(73) Proprietor: CellaVision AB, 223 62 Lund (SE)
(72) Inventor: ALMERS, Martin, 226 51 Lund (SE); HEDLUND, Sven, 226 57 Lund (SE)
(74) Representative: AWA Sweden AB
(86) International application number: PCT/EP2023/062434
(87) International publication number: WO 2023/217869

(56) References cited:
- US-A1- 2006 159 367
- US-A1- 2012 092 476
- US-A1- 2018 356 621
- US-A1- 2022 076 411

## Description

### Technical field

The present inventive concept relates to a method and a device for identifying a region of interest of a sample.

### Background of the invention

Scanning samples, for example of blood or bone marrow smears, is usually done using a digital microscope. However, with greater magnification and higher resolution, the field of view of the microscope decreases, resulting in an increase of the number of images needed to scan the sample. Scanning a large area with a high-magnification microscope objective therefore typically takes a considerable amount of time. For example, a 100x microscope objective typically has a field of view of 0.15 × 0.2 mm², which means that a sample of 30 × 15 mm² would need to be imaged at about 20000 individual positions in order to fully image the sample. In order to produce detailed images of a sample, the microscope objective needs to be moved in order to properly focus on the sample. Each such movement of the microscope objective takes time, and taking the large amount of positions that typically are imaged, a full imaging of the sample can take a considerable amount of time.

In some cases, the resolution of a highly magnifying microscope objective is not needed, and it is instead desired to scan a larger area. This may be the case when detecting objects within the sample is the main priority instead of actually analyzing the sample. In certain cases, this can be solved by changing the microscope objective for one with a relatively lower magnification, since a lower resolutions results in a larger field of view. However, some microscope systems are only equipped with highly magnifying microscope objectives or with a single non-changeable highly magnifying microscope and it is therefore not possible to increase the field of view of the microscope objective. Hence, there exists a need within the art. The document US 2006/159367 A1 discloses a method and apparatus for identifying a region of interest of a sample according to the state of the art.

### Summary of the invention

It is an objective to, at least partly, mitigate, alleviate, or eliminate one or more of the above-identified deficiencies in the art singly or in any combination.

According to a first aspect a method for identifying a region of interest of a sample is provided. The method comprising: capturing, by an image sensor, a plurality of digital image data sets, each digital image data set comprising pixels and pertaining to a position of a plurality of positions of the sample; for each digital image data set: forming a set of combined pixels, each combined pixel having a pixel value, and wherein each pixel value is determined based on at least one of an intensity value and a color value pertaining to a subset of pixels of the digital image data set, and forming a compressed digital representation comprising the set of combined pixels; arranging the compressed digital representations in a data structure, thereby forming a common compressed digital representation of the sample, wherein the data structure for each compressed digital representation includes information pertaining to a position of the plurality of positions of the sample of the digital image data set associated with the compressed digital representation; and identifying a region of interest of the sample based on a pixel value of the common compressed digital representation.

Within the context of this disclosure, the wording "region of interest" should be construed as a region of the sample that is of relatively higher interest than other regions of the sample. Such region may, e.g., comprise one or more objects within the sample that may be of interest for analysis and/or imaging, etc.

Within the context of this disclosure, the wording "digital image data sets" should be construed as data pertaining to digital images captured using the image sensor. A digital image data set may be used to form a digital image of the corresponding imaged portion of the sample.

Within the context of this disclosure, the wording "compressed digital representation" should be construed as a representation of the corresponding digital image data set. The compressed digital representation preferably comprises fewer pixels than the plurality of digital image data sets. A number of pixels in the compressed digital representation may be the similar to, or equal to, a number of formed combined pixels used to form the compressed digital representation.

The compressed digital representation is arranged in a data structure to form the common compressed digital representation of the sample. The data structure includes information pertaining to a position of the plurality of positions of the sample of the digital image data set associated with the compressed digital representation for each compressed digital representation. In other words, the data structure includes, for each compressed digital representation, information pertaining to a position of the plurality of positions of the sample at which its associated digital image data set (i.e., the digital image data set from which the compressed digital representation is formed) was captured. Thus, the compressed digital representations may be ordered in relation to what position of the sample they originate from to, e.g., form a pictorial representation of the sample. Any type of data structure may be used to advantage. Non-limiting examples of relevant data structures include an image, an array, a vector, a matrix, and a list.

The present inventive concept allows for the identification of a region of interest using less information than what is captured by the image sensor. Put differently, the captured information is reduced, e.g., by reducing the number of pixels, and the region of interest of the sample is identified using the reduced information. This, in turn, reduces an amount of data that needs to be processed in order for the region of interest of the sample to be identified. Such reduction of the amount of data to be processed may reduce associated processing power and/or associated bandwidth requirement.

A further associated advantage is that the region of interest of the sample may be identified without using spatial details of the sample depicted in the plurality of digital image data sets. Instead, the region of interest may be identified from pixel values of the common compressed digital representation (i.e., pixel values of the set of combined pixels). Hence, since the region of interest of the sample may be identified without using spatial details of the sample, the sample need not be in focus when capturing the plurality of digital image data sets.

In the act of forming a set of combined pixels, each pixel value of the sets of combined pixels may be determined based on a function of at least one of an intensity value and a color value pertaining to a subset of pixels of the digital image data set.

Hence, each pixel value of the sets of combined pixels may be determined by inputting at least one of an intensity value and a color value pertaining to a subset of pixels of the digital image data set into a function thereby obtaining, as an output, a pixel value. The so obtained pixel value will thus be based on a function of at least one of an intensity value and a color value. As is to be understood, each pixel value of the sets of combined pixels may be determined by inputting at least one of a value related to an intensity value and a value related to a color value pertaining to a subset of pixels of the digital image data set into a function. In other words, not the exact intensity value and/or color value will have to be inputted into the function to determine each pixel value. For instance, a close value, a rounded off value or a value otherwise related to the intensity value and/or color value may be used to advantage.

Within the context of this disclosure, the wording "function" should be construed as operation on an input value resulting in a particular output value, where the relation between the input value and the output value is dictated by the function.

The function may include performing a single operation directly on the input value. Hence, the function may include performing an operation on at least one of an intensity value and a color value pertaining to a subset of pixels of the digital image data set. Examples of such operations include for each pixel forming a mean value, a weighted mean value, a median value of at least one of an intensity value and a color value pertaining to a subset of pixels of the digital image data set.

The function may be a one-to-one relation between an input value and an output value.

The function may include performing multiple operations wherein a first operation is performed directly on the input value. Hence, the function may include performing a first operation on at least one of an intensity value and a color value pertaining to a subset of pixels of the digital image data set and subsequently performing a second operation on the result of the first operation. Non-limiting examples of such operations include for each pixel forming a square value, a square root value or a logarithm value of at least one of an intensity value and a color value for each pixel of a subset of pixels of the digital image data set, and subsequently forming a mean value, a weighted mean value, a median value of the earlier obtained values thereby obtaining for each pixel a pixel value pertaining to a subset of pixels of the digital image data set.

Further, the function may include performing a first operation on at least one of an intensity value and a color value pertaining to a subset of pixels of the digital image data set and subsequently performing a second operation on the result of the first operation and subsequently performing a further operation on the result of the second operation. Any number of further operations may be used to advantage.

In the act of forming a set of combined pixels, each pixel value of the sets of combined pixels may be determined as a function of at least one of an intensity value and a color value pertaining to a subset of pixels of the digital image data set.

Each pixel value of the sets of combined pixels may be an average value, a median value, or a sum of the subset of pixels of the respective digital image data set.

An associated advantage is that each pixel value of the sets of combined pixels may be calculated in a simple and/or efficient manner.

Each set of combined pixels may consist of one combined pixel.

An associated advantage is that a number of pixels (i.e., combined pixels) of the common combined digital representation may be reduced, further reducing one or more of associated bandwidth requirements, memory requirements, and processing requirements.

The subset of pixels of the digital image data set may consist of all pixels of the digital image data set.

Put differently, each pixel value of the sets of combined pixels may be based on at least one of an intensity value and a color value pertaining to all pixels of the respective digital image data set.

An associated advantage is that the number of pixels (i.e., combined pixels) of the common combined digital representation may be reduced, further reducing one or more of associated bandwidth requirements, memory requirements, and processing requirements.

The subset of pixels may be a predetermined subset of pixels.

Put differently, a subset of the digital image data set may comprise a predetermined number of pixels.

According to second aspect, a device for identifying a region of interest of a sample is provided. The device comprising: an image sensor, and circuitry configured to execute: a capturing function configured to capture, using the image sensor, a plurality of digital image data sets, each digital image data set comprising pixels and pertaining to a position of a plurality of positions of the sample; a forming function configured to, for each digital image data set, form a set of combined pixels, each combined pixel having a pixel value, and wherein each pixel value is determined based on at least one of an intensity value and a color value pertaining to a subset of pixels of the digital image data set, and to form a compressed digital representation comprising the set of combined pixels; an arranging function configured to arrange the compressed digital representations in a data structure, thereby forming a common compressed digital representation of the sample, wherein the data structure for each compressed digital representation includes information pertaining to a position of the plurality of positions of the sample of the digital image data set associated with the compressed digital representation; and an identifying function configured to identify a region of interest of the sample based on a pixel value of the common compressed digital representation.

Each pixel value of the sets of combined pixels may be an average value, a median value, or a sum of the subset of pixels of the respective digital image data set.

Each set of combined pixels may consist of one combined pixel.

The subset of pixels of the digital image data set may consist of all pixels of the digital image data set.

The subset of pixels may be a predetermined subset of pixels.

The above-mentioned features of the first aspect, when applicable, apply to this second aspect as well. In order to avoid undue repetition, reference is made to the above.

The device may be a camera.

According to a third aspect, a non-transitory computer-readable storage medium is provided. The non-transitory computer-readable storage medium comprises program code portions that, when executed on a device comprising processing capabilities and an image sensor, performs the method according to the first aspect.

The above-mentioned features of the first aspect and the second aspect, when applicable, apply to this third aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the inventive concept. The figures should not be considered limiting the inventive concept to the specific variant; instead, they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates a microscope system comprising a device for identifying a region of interest of a sample.
Figure 2A-2C illustrates non-limiting examples of how a compressed representation of the sample may be formed.
Figure 3A-3D illustrates a non-limiting example of how a common compressed digital representation of the sample may be formed.
Figure 4 is a block scheme of a method for identifying a region of interest of a sample.
Figure 5 illustrates a non-transitory computer-readable storage medium.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

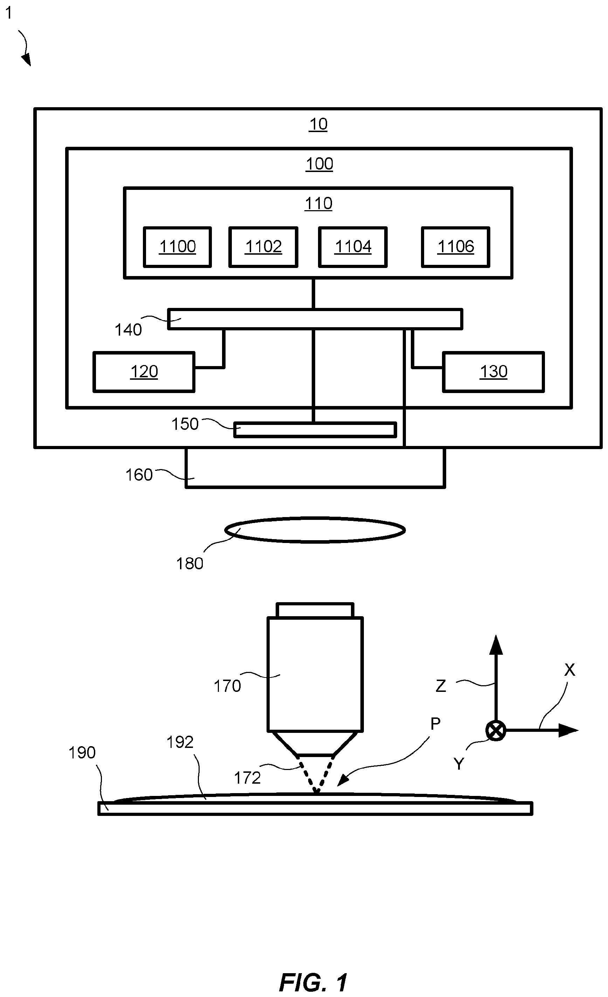

In the following, a device 10 for identifying a region of interest of a sample 192 will be described in the context of a microscope system 1 illustrated in Fig. 1. In this context, "region of interest" may be a region of the sample 192 that is of relatively higher interest than other regions of the sample 192. Such region may, e.g., comprise one or more objects within the sample 192 that may be of interest for analysis and/or imaging, etc.

The microscope system 1 illustrated in Fig. 1 comprises the device 10 for identifying a region of interest of the sample 192. As is illustrated in Fig. 1, the microscope system 1 may comprise a microscope objective 170, a relay lens 180, and a sample holder 190. In the example illustrated in Fig. 1, the device 10 is a camera. The device 10 comprises an image sensor 150, and circuitry 100. As is illustrated in Fig. 1, the device 10 may further comprise one or more of a memory 110, a processing unit 120, a transceiver 130, and a data bus 140. The device 10 may comprise a shutter 160 that may be controlled such that light may be blocked or allowed to reach the image sensor 150. The processing unit 120 may comprise a central processing unit (CPU) and/or a graphical processing unit (GPU). The transceiver 130 may be configured to communicate with external devices. For example, the transceiver 130 may be configured to communicate with servers, computer external peripherals (e.g., external storage), etc. The external devices may be local devices or remote devices (e.g., a cloud server). The transceiver 130 may be configured to communicate with the external devices via an external network (e.g., a local-area network, the internet, etc.). The transceiver 130 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire. One or more of the memory 110, the processing unit 120, the transceiver 130, the image sensor 150, and the shutter 160 may communicate via the data bus 140. The memory 110 may be a non-transitory computer-readable storage medium. The memory 110 may be a random-access memory. The memory 110 may be a non-volatile memory. As is illustrated in the example of Fig. 1, the memory 110 may store program code portions corresponding to one or more functions. The program code portions may be executable by the processing unit 120, which thereby performs the functions. Hence, when it is referred to that the circuitry 100 is configured to execute a specific function, the processing unit 120 may execute program code portions corresponding to the specific function which may be stored on the memory 110. However, it is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two.

The sample holder 190 may comprise a microscope slide. In the example of Fig. 1, the sample 192 has been applied onto the microscope slide of the sample holder 190. It is to be understood that the sample 192 may be covered by a coverslip (not illustrated in Fig. 1). The sample 192 may be a biological sample. The sample 192 may, e.g., be a sample (e.g., blood, bone marrow, tissue, etc.) from a human or an animal. The sample 192 may predominantly be a two-dimensional sample. For instance, the sample 192 may be a smear sample. The sample 192 may be a three-dimensional sample. For instance, the sample 192 may be a tissue sample. The sample holder 190 may be configured to hold the sample 192 to be analyzed. The sample holder 190 may be movable (e.g., by being coupled to manual and/or motorized stages), thereby allowing the sample 192 to be moved such that different portions of the sample 192 may be imaged by microscope objective 170 onto the image sensor 150. Put differently, the sample holder 190 may further comprise manual and/or motorized stages arranged to move the sample 192 in a plane extending substantially along a first axis X and a second axis Y. As is seen in the example of Fig. 1, a surface of the sample holder 190 (or the microscope slide) may extend in a plane having a normal parallel to a third axis Z. The first axis X, the second axis Y, and the third axis Z may be mutually perpendicular.

As is illustrated in Fig. 1, the microscope objective 170 may be configured to image a portion at a position P of the sample 192 onto the image sensor 150 via the relay lens 180. It is to be understood that the relay lens 180 may be chosen (e.g., focal length, material, size, etc.) depending on a magnification and/or a numerical aperture of the microscope objective 170. A size of the imaged portion of the sample 192 may depend on a field of view 172 of the microscope objective 170. Typically, a microscope objective having a relatively higher magnification has a smaller field of view than a microscope objective having a relatively lower magnification.

The microscope objective 170 may be movable along the third axis Z by being coupled to a manual and/or motorized stage (not illustrated in Fig. 1). An optical axis of the microscope objective 170 may be parallel to the third axis Z. Put differently, the microscope objective 170 may be movable in a focusing direction of the microscope objective 170. The microscope objective 170 may be movable such that a focused image may be captured by the image sensor 150. The focus of the microscope objective 170 may be controlled by manually and/or automatically. A position along the third axis Z of the microscope objective 170 may be controlled by a control circuitry (not illustrated in Fig. 1). For example, the control circuitry may be configured to execute a focus function (not illustrated in Fig. 1) configured to adjust the position of the microscope objective 170 along the third axis Z. The focus function may be configured to automatically adjust the position of the microscope objective 170 along the third axis Z. Put differently, the focus function may be an autofocus function. It is further to be understood that the relay lens 180 may be movable in a direction parallel to the third axis Z such that a focused image of the sample 192 may be captured by the image sensor 150.

The circuitry 100 is configured to execute a capturing function 1100, a forming function 1102, an arranging function 1104, and an identifying function 1106. The capturing function 1100 is configured to capture, using the image sensor 150, a plurality of digital image data sets. In this context, the "digital image data sets" may be data pertaining to digital images captured using the image sensor 150. The digital image data set may be a digital image. The digital image data set may be used to form a digital image of the corresponding imaged portion of the sample 192. The capturing function 1100 may be further configured to control the shutter 160. Each digital image data set of the plurality of digital image data sets comprises pixels. Each digital image data set of the plurality of digital image data sets pertains to a position of a plurality of positions of the sample 192. Put differently, each digital image data set may be associated with coordinates corresponding to the position of a corresponding imaged portion of the sample 192. The position of an imaged portion may be a position relative to the sample 192. A combined size of the imaged portions may correspond to a size of the sample 192. Put differently, the plurality of digital image data sets may correspond to a scan of the sample 192. Alternatively, the combined size of the imaged portions may be smaller than the size of the sample 192. Put differently, the plurality of digital image data sets may correspond to a partial scan of the sample 192.

The forming function 1102 is configured to, for each digital image data set, form a set of combined pixels. Each combined pixel may be correlated with the position of the plurality of positions of the sample 192 to which the digital image data set pertains to. Each combined pixel may be correlated with a position of the sample 192. Each set of combined pixels may consist of a predetermined number of pixels. The predetermined number of pixels may be less than a number of pixels of the corresponding digital image data set. Each set of combined pixels may, e.g., consist of one combined pixel. Each combined pixel has a pixel value. The pixel value of each combined pixel is determined based on at least one of an intensity value and a color value pertaining to a subset of pixels of the digital image data set. For example, each pixel value of the sets of combined pixels may be an average value, a median value, or a sum of the subset of pixels of the respective digital image data set. Hence, each pixel value of the sets of combined pixels may be an average value, a median value, or a sum of the pixel values of the subset of pixels of the respective digital image data set. A number of pixels of a set of combined pixels may be from one pixel to 50 % of a number of pixels of the subset forming the set of combined pixels. For example, in case the subset of pixels comprises 100 pixels, the number of pixels in the corresponding set of combined pixels may be from 1 to 50 pixels.

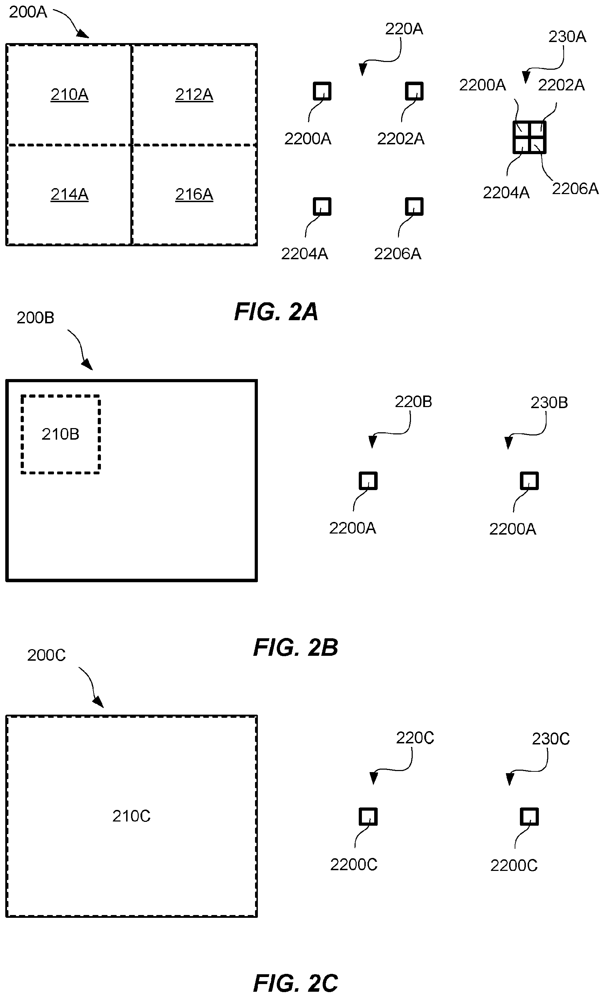

Non-limiting examples of how the set of combined pixels may be formed will now be described with reference to Fig. 2A - Fig. 2C.

Figure 2A illustrates a digital image data set 200A of the plurality of digital image data sets. The digital image data set 200A comprises pixels and pertains to a position of a plurality of positions of the sample 192. In the example of Fig. 2A, four subsets 210A, 212A, 214A, 216A of pixels are illustrated. It is however to be understood that other number of subsets may be used instead. For example, a single subset 210B, 210C of pixels of the digital image data set 200B, 200C may be used as in the examples of Fig. 2B and Fig. 2C. Each subset of pixels may be a predetermined subset of pixels. Each subset of the digital image data set may comprise a predetermined number of pixels. Each subset of pixels may comprise a number of pixels relative to the number of pixels of the digital image data set. For instance, the subset 210B may comprise a portion of the pixels of the digital image data set 200B as is illustrated in the example of Fig. 2B. The portion may be 10 % - 100 %. One or more subsets of a digital image data set may be non-overlapping (as in the example of Fig. 2A) or overlapping. The subset of pixels of the digital image data set may comprise at least two pixels. As is illustrated in the example of Fig. 2C, the subset 210C of pixels of the digital image data set 200C may, e.g., consist of all pixels of the digital image data set 200C. Put differently, each pixel value of the sets of combined pixels may be based on at least one of an intensity value and a color value pertaining to all pixels of the respective digital image data set. As is further illustrated in Fig. 2A, a set 220A of combined pixels is formed from the subsets 210A, 212A, 214A, 216A of pixels of the digital image data set 200A. In this example, the set 220A of combined pixels comprises four combined pixels 2200A, 2202A, 2204A, 2206A formed based on the four subsets 210A, 212A, 214A, 216A. In the examples illustrated in Fig. 2B and Fig. 2C, the sets 220B, 220C of combined pixels each comprises a single combined pixel 2200B, 2200C formed from the subset 210B, 210C of the respective digital image data set 200B, 200C.

Turning back to Fig. 1, the forming function 1102 is further configured to, for each digital image data set, form a compressed digital representation comprising the set of combined pixels. In this context, the compressed digital representation may be a representation of the corresponding digital image data set. The compressed digital presentation may preferably comprise fewer pixels than the corresponding digital image data set. A number of pixels in the compressed digital representation may be similar, or equal, to a number of formed combined pixels used to form the compressed digital representation. For example, in case the formed set of combined pixels only consists of one combined pixel is formed, the compressed digital representation may comprise only one pixel (i.e., the combined pixel of the formed set of combined pixels). In the example of Fig. 2A, the formed compressed digital representation 230A comprises four combined pixels 2200A, 2202A, 2204A, 2206A. As is further seen in the example of Fig. 2A, each combined pixel in the compressed digital representation 230A may have a position relative to the compressed digital representation which is similar to a position of the corresponding subset of pixels relative to the digital image data. For instance, the top left combined pixel 2202A in the compressed digital representation 230A illustrated in Fig. 2A is formed of a combined pixel 2202A, which, in turn, is formed based on a subset 210A of pixels at the top left of the digital image data set 200A. In Fig. 2B and Fig. 2C, the compressed digital representations 230B, 230C each comprises a single combined pixel 2200B, 2200C, since only a single combined pixel is formed in each of those examples.

Turning back to Fig. 1, the arranging function 1104 is configured to arrange the compressed digital representations in a data structure, thereby forming a common compressed digital representation of the sample 192. The common compressed digital representation of the sample 192 may resemble a digital image of the sample 192. A relative position of each compressed digital representation in the common compressed digital representation may be based on a relative position in the sample 192 depicted by a corresponding digital image forming the compressed digital representation. The position of each compressed digital representation relative to the common compressed digital representation may be the same as the position of the corresponding imaged portion relative to the sample 192.

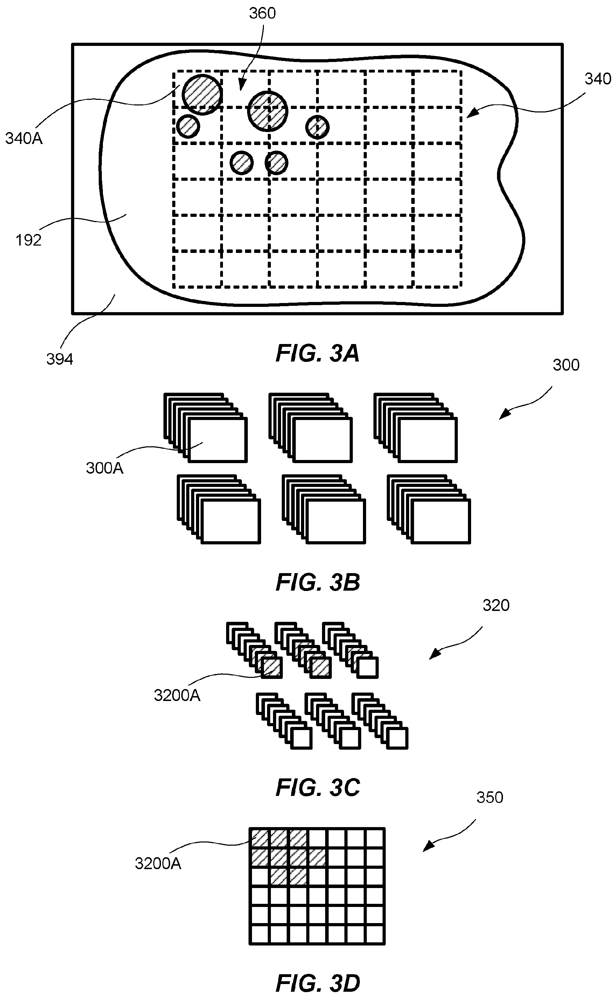

A non-limiting example of how the common compressed digital representation 350 of the sample 192 may be formed will now be described with reference to Fig. 3A - Fig. 3D.

Figure 3A illustrates a top view of the sample 192. The sample 192 in Fig. 3A is present on a microscope slide 394. A plurality of imaged portions 340 of the sample 192 (i.e., a plurality of portions 340 of the sample 192 imaged by the image sensor 150) is further indicated with dashed lines. Each imaged portion in Fig. 3A corresponds to a position in the sample 192. For example, a first portion 340A of the sample 192 is associated with a first position in the sample 192. It is to be understood that a position in the sample 192 may be defined in range of different ways. For example, the position of a portion of the sample 192 may be a position of the center of the portion. A different example is that the position of a portion of the sample 192 may be a position of a corner of the portion. In this example, only a part of the sample 192 is imaged. Put differently, in the example of Fig. 3A, a combined area of the imaged portions 340 is smaller than an area of the sample 192. It is however to be understood that the entire sample 192 may be imaged. As is seen in Fig. 3A, several objects 360 are present in the sample 192. Here, the objects 360 are of interest for analysis and/or imaging, and the imaged portions 340 in which the objects are present may therefore be the region of interest of the sample 192 in Fig. 3A. For each imaged portion in Fig. 3A, a digital image data set is captured using the image sensor 150, whereby a plurality 300 of digital image data sets is formed. The plurality 300 of digital image data sets is illustrated in Fig. 3B. Each digital image data set of the plurality 300 of digital image data sets corresponds to an imaged portion of the sample 192. For example, a first digital image data set 300A is captured by the image sensor 150 when a first portion 340A of the sample 192 is imaged by the microscope objective 170. Based on the plurality 300 of digital image data sets, sets 320 of combined pixels are formed; for example in one or more manners similar to as described in connection with Fig. 2A - Fig. 2C. The sets 320 of combined pixels are illustrated in Fig. 3C. In this example, each combined pixel is formed by averaging intensity values of all pixels in the corresponding digital image data set. In the example of Fig. 3C, each set of combined pixels comprises one combined pixel. The sets of combined pixels are, as illustrated in Fig. 3D, arranged in a data structure, and thereby forms a common compressed digital representation 350 of the sample 192. Put differently, in the example of Fig. 3D, each pixel of the common compressed digital representation 350 corresponds to a digital image data set of the plurality 300 of digital image data sets. For instance, a first combined pixel 3200A is formed based on the first digital image data set 300A. The first combined pixel 3200A has, as illustrated in the example of Fig. 3D, a position relative to the common compressed digital representation 350 which may be the same as the position of the corresponding imaged portion (i.e., the first portion 340A) relative to the sample 192. It is to be understood that the common compressed digital representation 350 of Fig. 3D is an example only, and other arrangements may be contemplated by the skilled person. For instance, the sets 320 of combined pixels may be arranged in an array (one dimensional or multidimensional), and the position of each element (i.e., combined pixel) relative to the array may correspond to a position in the sample 192.

Turning back to Fig. 1; the identifying function 1106 is configured to identify a region of interest of the sample 192 based on a pixel value of the common compressed digital representation. The identifying function 1106 may be configured to identify the region of interest of the sample 192 by comparing pixel values of pixels of the common compressed digital representation with a threshold. The threshold may be relative to the pixel values of pixels of the common compressed digital representation. For instance, the threshold may be based on an average or a median of the pixel values of pixels of the common compressed digital representation. The threshold may be based on pixel values of a background level. For example, it may be known that specific pixels of the common compressed digital representation are not associated with the imaged sample 192. This may be since applying the sample 192 onto the sample holder 190, some portions of the sample holder 190 may not receive sample 192. The sample holder 190 may, e.g., be configured such that one or more portions of the sample holder 190 does not receive sample 192. Pixels pertaining to such portions of the sample holder 190 may be used to determine a background level. For instance, at least one of the plurality of digital images may be a digital image of an empty portion of the sample holder 190, and that digital image may be used to determine the background level. The background level may, e.g., be an average or median of such pixels. The threshold may be scaled by a numerical factor. The numerical factor may be smaller than 1. The numerical factor may be 0.5. Depending on a type of the imaged sample 192, the region of interest may correspond to portions of the imaged sample 192 for which the pixel values of the combined pixels are above or below the threshold. For example, in Fig. 3D, a number of pixels have pixel values lower than the threshold (possibly scaled by a numerical factor). The digital image data sets that correspond to these combined pixels, in turn, correspond to portions of the sample 192 that are of relatively higher interest. These portions of relatively higher interest are thereby determined as the region of interest of the sample 192. Hence, the region of interest can be identified using less information than what is actually captured by the image sensor 150. In the above, the identifying function 1106 is described as identifying the region of interest of the sample 192 by comparing pixel values of the common compressed digital representation with a threshold. However, it is to be understood that other methods of identifying the region of interest of the sample may be used. For instance, the identifying function 1106 may be configured to identify the region of interest of the sample 192 using machine learning. There are several machine learning algorithms that may be suitable for object detection, e.g., YOLO, SSD, etc. Hence, the captured information is reduced, e.g., by reducing the number of pixels, and the region of interest of the sample 192 is identified using the reduced information. This, in turn, reduces an amount of data that needs to be processed in order for the region of interest of the sample 192 to be identified. Such reduction of the amount of data to be processed may reduce associated processing power and/or associated bandwidth requirement. For instance, the device 10 does not need to send the plurality of digital images to a separate device 10, which thereafter analyses the digital images in order to identify the region of interest in the sample 192. The region of interest of the sample 192 may be identified without having high requirements of the sample 192 being in focus when capturing the plurality of digital image data sets. This since the pixel value of a combined pixel may be less sensitive to changes in focus. Put differently, the pixel value of a combined pixel formed using a digital image data set captured when the imaged portion of the sample 192 is in focus may be similar to the pixel value of a combined pixel formed using a digital image data set captured when the same imaged portion of the sample 192 is not in focus. Put differently, the region of interest of the sample 192 may be determined without using spatial details of the sample 192, and the digital image data sets may be captured without having the sample 192 in focus. The microscope objective 170 may be positioned such that the sample 192 is in focus when the first digital image data set is captured. By assuming that the sample 192 is substantially planar, further digital image data sets may be captured without adjusting the focus of the microscope objective 170. Hence, the process of capturing the digital image data sets may take less time. For instance, the sample 192 may be moved during the capture of the digital image data sets (since there is no need for preserving the spatial details of the sample in the digital image data sets), further reducing the time it takes to capture the digital image data sets of the sample 192. It is however to be understood that the focus of the microscope objective 170 may be adjusted, if needed, during the capturing of digital image data sets. This may be the case if the area of the sample 192 to be imaged is large compared to the field of view 172 of the microscope objective 170. This may, additionally or alternatively, be influenced by the manual/motorized stages used to move the sample. For instance, depending on how precisely the stages have been mounted (e.g., a relative alignment of two perpendicular stages configured to move the sample in a horizontal plane) and/or the quality of the stages (e.g., linearity, vibrations related to the movement, etc.) may result in an unintentional movement in focus (e.g., in a vertical direction) of the sample 192 during movement (e.g., in the horizontal plane). The present method may allow a region of interest of the sample 192 to be identified even under such non-ideal conditions.

The present inventive concept will now be described with reference to a specific example implementation. It is to be understood that this example is discussed for the understanding of the present inventive concept and is not intended to be limiting. In this implementation, the device for identifying a region of interest of a sample comprises a digital camera and a computer. Upon capturing a digital image data set (e.g., a digital image) of the sample, the digital camera is configured to determine an average of the intensity values of the pixel of the captured digital image data set. The determined average of the intensity values of the pixels of captured digital image is then used as the pixel value of the combined pixel. Hence, in this implementation, each set of combined pixels comprises a single combined pixel, and the pixel value of each combined pixel is the average of the pixel values of the respective captured digital image data set. Thus, in this implementation, each compressed digital representation comprises a single combined pixel. The compressed digital representations are transmitted from the digital camera to the computer. In this example, each compressed digital representation (i.e., the average of the intensity values of pixels of the captured image data set) is transmitted to the computer in connection with the capture of the digital image data set. Put differently, the average is sent to the computer from the digital camera as soon as the camera has captured the digital image data set. After receiving them, the computer is configured to arrange the compressed digital representations in a data structure to form a common compressed digital representation of the sample. In this implementation, a number of pixels of the common compressed digital representation of the sample is equal to a number of digital image data sets of the plurality of digital image data sets used to form the combined pixels. Finally, the computer is configured to identify the region of interest of the sample 192 based on the common compressed digital representation.

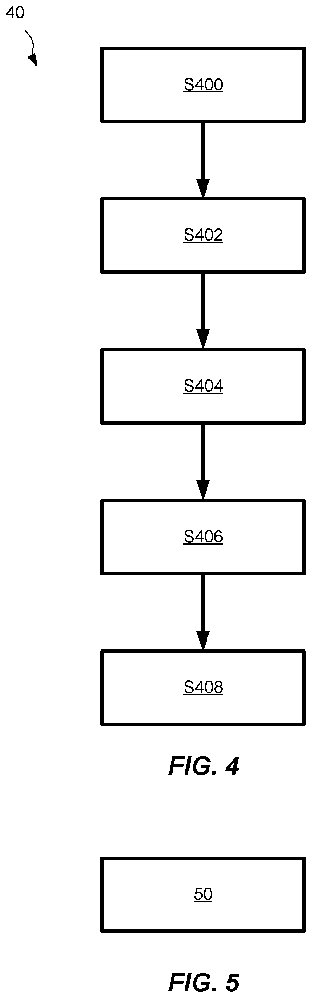

Figure 4 is a box scheme of a method 40 for identifying a region of interest of a sample 192. The method 40 may be implemented in circuitry in a camera, e.g., the circuitry 100 of the device 10 illustrated in Fig. 1. The method 40 comprises: capturing S400, by an image sensor 150, a plurality of digital image data sets, each digital image data set comprising pixels and pertaining to a position of a plurality of positions of the sample 192; for each digital image data set: forming S402 a set of combined pixels, each combined pixel having a pixel value, and wherein each pixel value is determined based on at least one of an intensity value and a color value pertaining to a subset of pixels of the digital image data set, and forming S404 a compressed digital representation comprising the set of combined pixels; arranging S406 the compressed digital representations in a data structure, thereby forming a common compressed digital representation of the sample 192; and identifying S408 a region of interest of the sample 192 based on a pixel value of the common compressed digital representation. Each pixel value of the sets of combined pixels may be an average value, a median value, or a sum of the subset of pixels of the respective digital image data set. Each set of combined pixels may consist of one combined pixel. The subset of pixels of the digital image data set may consist of all pixels of the digital image data set. The subset of pixels may be a predetermined subset of pixels.

Figure 5 illustrates a non-transitory computer-readable storage medium 50. The non-transitory computer-readable storage medium 50 comprises program code portions that, when executed on a device comprising processing capabilities, performs the method illustrated in Fig. 4.

The person skilled in the art realizes that the present inventive concept by no means is limited to the preferred variants described above. On the contrary, many modifications and variations are possible within the scope of the appended claims.

For example, the device for identifying a region of interest of a sample may be a single device, e.g., a digital camera. Alternatively, the device may be more than one device. For instance, the device may comprise a digital camera and a computing device (e.g., a computer, a server, a cloud server, a smartphone, etc.), and the functionality of the circuitry of the device may be distributed between the digital camera and the computing device. For instance, the capturing function and, potentially, the forming function may be executed at the digital camera, and one or more of the arranging function and the identifying function may be executed at the computing device.

Additionally, variations to the disclosed variants can be understood and effected by the skilled person in practicing the claimed invention, from a study of the drawings, the disclosure, and the appended claims.

## Claims

1. A method (40) for identifying a region of interest of a sample, the method (40) comprising:
capturing (S400), by an image sensor (150), a plurality of digital image data sets (300), each digital image data set comprising pixels and pertaining to a position of a plurality of positions of the sample;
for each digital image data set:
forming (S402) a set of combined pixels, each combined pixel having a pixel value, and wherein each pixel value is determined based on at least one of an intensity value and a color value pertaining to a subset of pixels of the digital image data set, and **characterised in that** it further comprises the steps of:
forming (S404) a compressed digital representation comprising the set of combined pixels;
arranging (S406) the compressed digital representations in a data structure, thereby forming a common compressed digital representation (350) of the sample (192), wherein the data structure for each compressed digital representation includes information pertaining to a position of the plurality of positions of the sample of the digital image data set associated with the compressed digital representation; and
identifying (S408) a region of interest of the sample (192) based on a pixel value of the common compressed digital representation.

2. The method (40) according to claim 1, wherein each pixel value of the sets of combined pixels is an average value, a median value, or a sum of the subset of pixels of the respective digital image data set.

3. The method (40) according to claim 1 or 2, wherein each set of combined pixels consists of one combined pixel.

4. The method (40) according to any one of claims 1-3, wherein the subset of pixels of the digital image data set consists of all pixels of the digital image data set.

5. The method (40) according to any one of claims 1-4, wherein the subset of pixels is a predetermined subset of pixels.

6. A device (10) for identifying a region of interest of a sample, comprising:
an image sensor (150); and
circuitry (100) configured to execute:
a capturing function (1100) configured to capture, using the image sensor (150), a plurality of digital image data sets, each digital image data set comprising pixels and pertaining to a position of a plurality of positions of the sample (192); **characterised in that** the circuitry is further configured to execute:
a forming function (1102) configured to, for each digital image data set, form a set of combined pixels, each combined pixel having a pixel value, and wherein each pixel value is determined based on at least one of an intensity value and a color value pertaining to a subset of pixels of the digital image data set, and to form a compressed digital representation comprising the set of combined pixels;
an arranging function (1104) configured to arrange the compressed digital representations in a data structure, thereby forming a common compressed digital representation of the sample (192), wherein the data structure for each compressed digital representation includes information pertaining to a position of the plurality of positions of the sample of the digital image data set associated with the compressed digital representation; and
an identifying function (1106) configured to identify a region of interest of the sample (192) based on a pixel value of the common compressed digital representation.

7. The device (10) according to claim 6, wherein each pixel value of the sets of combined pixels is an average value, a median value, or a sum of the subset of pixels of the respective digital image data set.

8. The device (10) according to claim 6 or 7, wherein each set of combined pixels consists of one combined pixel.

9. The device (10) according to any one of claims 6-8, wherein the subset of pixels of the digital image data set consists of all pixels of the digital image data set.

10. The device (10) according to any one of claims 6-9, wherein the subset of pixels is a predetermined subset of pixels.

11. The device (10) according to any one of claims 6-10, wherein the device (10) is a camera.

12. A non-transitory computer-readable storage medium (50) comprising program code portions that, when executed on a device comprising processing capabilities and an image sensor, performs the method (40) according to any one of claims 1-5.

## Patentansprüche

1. Verfahren (40) zum Identifizieren eines Gebiets von Interesse einer Probe, wobei das Verfahren (40) Folgendes umfasst:
Erfassen (S400), durch einen Bildsensor (150), mehrerer digitaler Bilddatensätze (300), wobei jeder digitale Bilddatensatz Pixel umfasst und eine Position mehrerer Positionen der Probe betrifft;
für jeden digitalen Bilddatensatz:
Bilden (S402) eines Satzes von kombinierten Pixeln, wobei jedes kombinierte Pixel einen Pixelwert aufweist, und wobei jeder Pixelwert basierend auf einem Intensitätswert und/oder einem Farbwert bezüglich einer Teilmenge von Pixeln des digitalen Bilddatensatzes bestimmt wird, und **dadurch gekennzeichnet, dass** er ferner die folgenden Schritte umfasst:
Bilden (S404) einer komprimierten digitalen Repräsentation, die den Satz kombinierter Pixel umfasst; Anordnen (S406) der komprimierten digitalen Repräsentationen in einer Datenstruktur, wodurch eine gemeinsame komprimierte digitale Repräsentation (350) der Probe (192) gebildet wird, wobei die Datenstruktur für jede komprimierte digitale Repräsentation Informationen bezüglich einer Position der mehreren Positionen der Probe des digitalen Bilddatensatzes beinhaltet, die mit der komprimierten digitalen Repräsentation assoziiert ist; und
Identifizieren (S408) eines Gebiets von Interesse der Probe (192) basierend auf einem Pixelwert der gemeinsamen komprimierten digitalen Repräsentation.

2. Verfahren (40) nach Anspruch 1, wobei jeder Pixelwert der Sätze kombinierter Pixel ein Durchschnittswert, ein Medianwert oder eine Summe der Teilmenge von Pixeln des jeweiligen digitalen Bilddatensatzes ist.

3. Verfahren (40) nach Anspruch 1 oder 2, wobei jeder Satz kombinierter Pixel aus einem kombinierten Pixel besteht.

4. Verfahren (40) nach einem der Ansprüche 1-3, wobei die Teilmenge von Pixeln des digitalen Bilddatensatzes aus allen Pixeln des digitalen Bilddatensatzes besteht.

5. Verfahren (40) nach einem der Ansprüche 1-4, wobei die Teilmenge von Pixeln eine vorbestimmte Teilmenge von Pixeln ist.

6. Vorrichtung (10) zum Identifizieren eines Gebiets von Interesse einer Probe, welche Folgendes umfasst:
einen Bildsensor (150); und
eine Schaltungsanordnung (100), die dazu konfiguriert ist, Folgendes auszuführen:
eine Erfassungsfunktion (1100), die dazu konfiguriert ist, mehrere digitale Bilddatensätze unter Verwendung des Bildsensors (150) zu erfassen, wobei jeder digitale Bilddatensatz Pixel umfasst und eine Position mehrerer Positionen der Probe (192) betrifft; **dadurch gekennzeichnet, dass** die Schaltungsanordnung ferner dazu konfiguriert ist, Folgendes auszuführen:
eine Bildungsfunktion (1102), die dazu konfiguriert ist, für jeden digitalen Bilddatensatz einen Satz kombinierter Pixel zu bilden, wobei jedes kombinierte Pixel einen Pixelwert aufweist, und wobei jeder Pixelwert basierend auf einem Intensitätswert und/oder einem Farbwert bezüglich eines Teilsatzes von Pixeln des digitalen Bilddatensatzes bestimmt wird, und eine komprimierte digitale Repräsentation zu bilden, die den Satz kombinierter Pixel umfasst;
eine Anordnungsfunktion (1104), die zum Anordnen der komprimierten digitalen Repräsentationen in einer Datenstruktur konfiguriert ist, wodurch eine gemeinsame komprimierte digitale Repräsentation der Probe (192) gebildet wird, wobei die Datenstruktur für jede komprimierte digitale Repräsentation Informationen bezüglich einer Position der mehreren Positionen der Probe des digitalen Bilddatensatzes beinhaltet, die mit der komprimierten digitalen Repräsentation assoziiert ist; und
eine Identifikationsfunktion (1106), die zum Identifizieren eines Gebiets von Interesse der Probe (192) basierend auf einem Pixelwert der gemeinsamen komprimierten digitalen Repräsentation konfiguriert ist.

7. Vorrichtung (10) nach Anspruch 6, wobei jeder Pixelwert der Sätze kombinierter Pixel ein Durchschnittswert, ein Medianwert oder eine Summe der Teilmenge von Pixeln des jeweiligen digitalen Bilddatensatzes ist.

8. Vorrichtung (10) nach Anspruch 6 oder 7, wobei jeder Satz kombinierter Pixel aus einem kombinierten Pixel besteht.

9. Vorrichtung (10) nach einem der Ansprüche 6-8, wobei die Teilmenge von Pixeln des digitalen Bilddatensatzes aus allen Pixeln des digitalen Bilddatensatzes besteht.

10. Vorrichtung (10) nach einem der Ansprüche 6-9, wobei die Teilmenge von Pixeln eine vorbestimmte Teilmenge von Pixeln ist.

11. Vorrichtung (10) nach einem der Ansprüche 6-10, wobei die Vorrichtung (10) eine Kamera ist.

12. Nichtflüchtiges computerlesbares Speicherungsmedium (50), das Programmcodeteile umfasst, die, wenn sie auf einer Vorrichtung ausgeführt werden, die Verarbeitungsfähigkeiten und einen Bildsensor umfasst, das Verfahren (40) nach einem der Ansprüche 1-5 durchführen.

## Revendications

1. Procédé (40) destiné à identifier une région d'intérêt d'un échantillon, le procédé (40) comprenant :
la capture (S400), par un capteur d'images (150), d'une pluralité d'ensembles de données d'image numériques (300), chaque ensemble de données d'image numériques comprenant des pixels et se rapportant à une position d'une pluralité de positions de l'échantillon ;
pour chaque ensemble de données d'image numériques :
la formation (S402) d'un ensemble de pixels combinés, chaque pixel combiné ayant une valeur de pixel, et chaque valeur de pixel étant déterminée d'après une valeur d'intensité et/ou une valeur de couleur se rapportant à un sous-ensemble de pixels de l'ensemble de données d'image numériques, et **caractérisé en ce qu'**il comprend en outre les étapes suivantes :
formation (S404) d'une représentation numérique compressée comprenant l'ensemble de pixels combinés ; agencement (S406) des représentations numériques compressées dans une structure de données, ce qui permet de former une représentation numérique compressée commune (350) de l'échantillon (192), la structure de données pour chaque représentation numérique compressée comportant des informations se rapportant à une position de la pluralité de positions de l'échantillon de l'ensemble de données d'image numériques associé à la représentation numérique compressée ; et
identification (S408) d'une région d'intérêt de l'échantillon (192) d'après une valeur de pixel de la représentation numérique compressée commune.

2. Procédé (40) selon la revendication 1, dans lequel chaque valeur de pixel des ensembles de pixels combinés est une valeur moyenne, une valeur médiane, ou une somme du sous-ensemble de pixels de l'ensemble de données d'image numériques respectif.

3. Procédé (40) selon la revendication 1 ou 2, dans lequel chaque ensemble de pixels combinés se compose d'un pixel combiné.

4. Procédé (40) selon l'une quelconque des revendications 1 à 3, dans lequel le sous-ensemble de pixels de l'ensemble de données d'image numériques se compose de tous les pixels de l'ensemble de données d'image numériques.

5. Procédé (40) selon l'une quelconque des revendications 1 à 4, dans lequel le sous-ensemble de pixels est un sous-ensemble prédéterminé de pixels.

6. Dispositif (10) destiné à identifier une région d'intérêt d'un échantillon, comprenant :
un capteur d'images (150) ; et
des circuits (100) conçus pour exécuter :
une fonction de capture (1100) conçue pour capturer, au moyen du capteur d'images (150), une pluralité d'ensembles de données d'image numériques, chaque ensemble de données d'image numériques comprenant des pixels et se rapportant à une position d'une pluralité de positions de l'échantillon (192) ; **caractérisé en ce que** les circuits sont en outre conçus pour exécuter :
une fonction de formation (1102) conçue pour, pour chaque ensemble de données d'image numériques, former un ensemble de pixels combinés, chaque pixel combiné ayant une valeur de pixel, et chaque valeur de pixel étant déterminée d'après une valeur d'intensité et/ou une valeur de couleur se rapportant à un sous-ensemble de pixels de l'ensemble de données d'image numériques, et pour former une représentation numérique compressée comprenant l'ensemble de pixels combinés ;
une fonction d'agencement (1104) conçue pour agencer les représentations numériques compressées dans une structure de données, formant ainsi une représentation numérique compressée commune de l'échantillon (192), la structure de données pour chaque représentation numérique compressée comportant des informations se rapportant à une position de la pluralité de positions de l'échantillon de l'ensemble de données d'image numériques associé à la représentation numérique compressée ; et
une fonction d'identification (1106) conçue pour identifier une région d'intérêt de l'échantillon (192) d'après une valeur de pixel de la représentation numérique compressée commune.

7. Dispositif (10) selon la revendication 6, dans lequel chaque valeur de pixel des ensembles de pixels combinés est une valeur moyenne, une valeur médiane, ou une somme du sous-ensemble de pixels de l'ensemble de données d'image numériques respectif.

8. Dispositif (10) selon la revendication 6 ou 7, dans lequel chaque ensemble de pixels combinés se compose d'un pixel combiné.

9. Dispositif (10) selon l'une quelconque des revendications 6 à 8, dans lequel le sous-ensemble de pixels de l'ensemble de données d'image numériques se compose de tous les pixels de l'ensemble de données d'image numériques.

10. Dispositif (10) selon l'une quelconque des revendications 6 à 9, dans lequel le sous-ensemble de pixels est un sous-ensemble prédéterminé de pixels.

11. Dispositif (10) selon l'une quelconque des revendications 6 à 10, le dispositif (10) étant une caméra.

12. Support de stockage non transitoire lisible par ordinateur (50) comprenant des portions de code de programme qui, lors de leur exécution sur un dispositif comprenant des capacités de traitement et un capteur d'images, effectuent le procédé (40) selon l'une quelconque des revendications 1 à 5.
